(19) Europäisches Patentamt
European Patent Office
Office européen des brevets

(11) **EP 2 146 301 A1**

(12) **EUROPEAN PATENT APPLICATION**
published in accordance with Art. 153(4) EPC

(43) Date of publication:
20.01.2010 Bulletin 2010/03

(51) Int Cl.:
*G06K 1/12* (2006.01)      *B21C 51/00* (2006.01)
*B25H 7/04* (2006.01)

(21) Application number: 08721561.2

(22) Date of filing: 07.03.2008

(86) International application number:
**PCT/JP2008/054143**

(87) International publication number:
**WO 2008/139771 (20.11.2008 Gazette 2008/47)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: 07.05.2007 JP 2007122539

(71) Applicant: **Vector CO., LTD.**
**2-12-16 Eki-minami**
**Kosai-shi**
**Shizuoka 431-0427 (JP)**

(72) Inventors:
• **KUDO, Tetsuya**
  **Kosai-shi**
  **Shizuoka 431-0427 (JP)**
• **KANEKO, Masashi**
  **Kosai-shi**
  **Shizuoka 431-0427 (JP)**
• **ODA, Tomohiro**
  **Kosai-shi**
  **Shizuoka 431-0427 (JP)**

(74) Representative: **Kling, Simone**
**Cabinet Lavoix**
**2, place d'Estienne d'Orves**
**75441 Paris Cedex 09 (FR)**

(54) **MARKING DEVICE**

(57)    A marking device includes a two-dimensional code forming unit converting first identification information into two-dimensional code information in accordance with a predetermined standard and forming a two-dimensional code on an object based on the two-dimensional code information, a two-dimensional code reading unit reading the two-dimensional code and generating second identification information in accordance with the standard, and a determination unit determining whether or not the first identification information matches the second identification information.

FIG. 1

## Description

Technical Field

The present invention relates to a marking device for forming a two-dimensional code on an object. This application claims priority on Japanese Patent Application No. 2007-122539 filed May 7, 2007, the entire contents of which are incorporated herein by reference.

Background Art

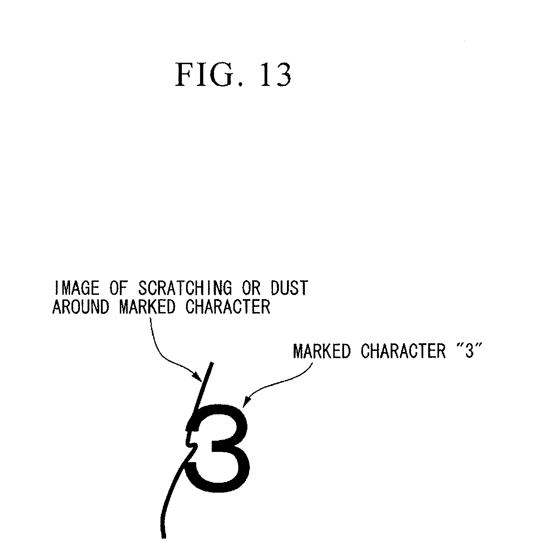

In the manufacturing process of automobile parts, for reliable identification of parts, the part number, the date of manufacture, or the like are marked as a character string. However, in known character reading devices which read marked characters, the characters may be erroneously read due to scratching or dust around the marked characters. For example, FIG. 13 shows an example where such erroneous reading occurs. Here, the marked character is "3", but the image of scratching or dust around the marked character may overlap at the left end of the marked character, such that the marked character may be read to be "8".

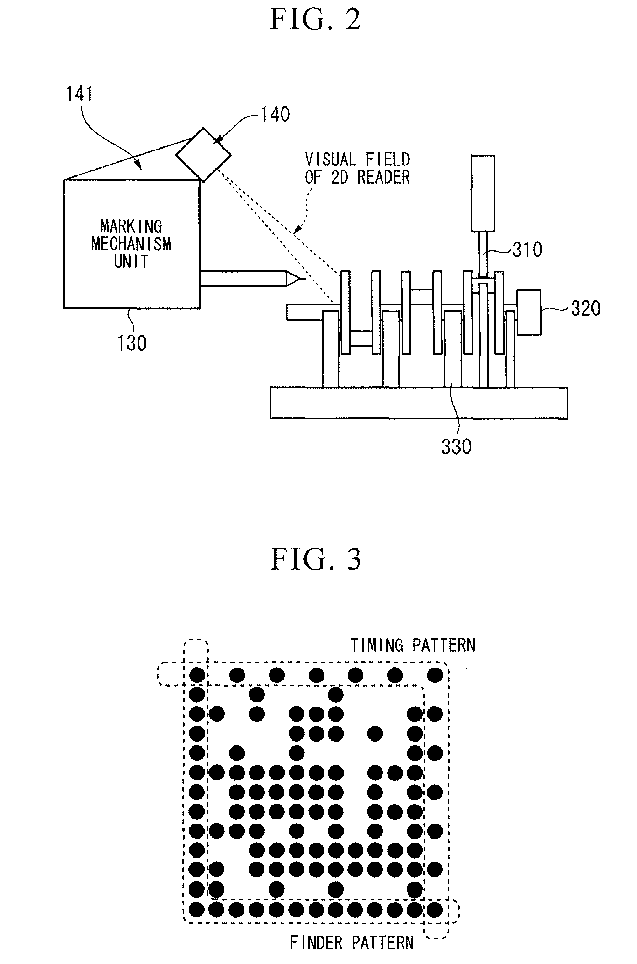

Accordingly, examples where a two-dimensional barcode (two-dimensional code (2D code)) shown in FIG. 3 is marked (engraved (or dotted)) are increasing. In the example of FIG. 3, successive dots are engraved at the left end and the lower end as a finder pattern, and dots are engraved at the right end and the upper end as a timing pattern corresponding to every other dot of the finder pattern. The finder pattern and the timing pattern form an outline. Information dotted in accordance with a predetermined rule is engraved as data dots within the outline based on the arrangement of the finder pattern and the timing pattern. Patent Document 1 describes an air pen for performing such engraving.

If such a 2D barcode is used, an error correction code may be added by a Reed-Solomon method or the like. When part of data is damaged, data recovery can be performed by using the error correction code. When data is damaged beyond recovery, a reading error occurs, and the characters are not erroneously read. A comparatively large number of characters can be encoded and marked in a small space. The structure or principle of the two-dimensional code is standardized as a so-called data matrix, QR code (Registered Trademark), or the like.

Although the two-dimensional code has the above-described features, the characters are coded, which makes it impossible for a person to recognize the characters as character string information. For this reason, with regard to actual parts, the part name, the manufacturer, the manufacturing facility, the date of manufacture, the lot number, the serial number, and the like are marked as a two-dimensional code, and minimal information, such as the lot number and the like, is marked as a character string taking into consideration the problem in that a person cannot read the two-dimensional code. Thus, a person can recognize minimal information.

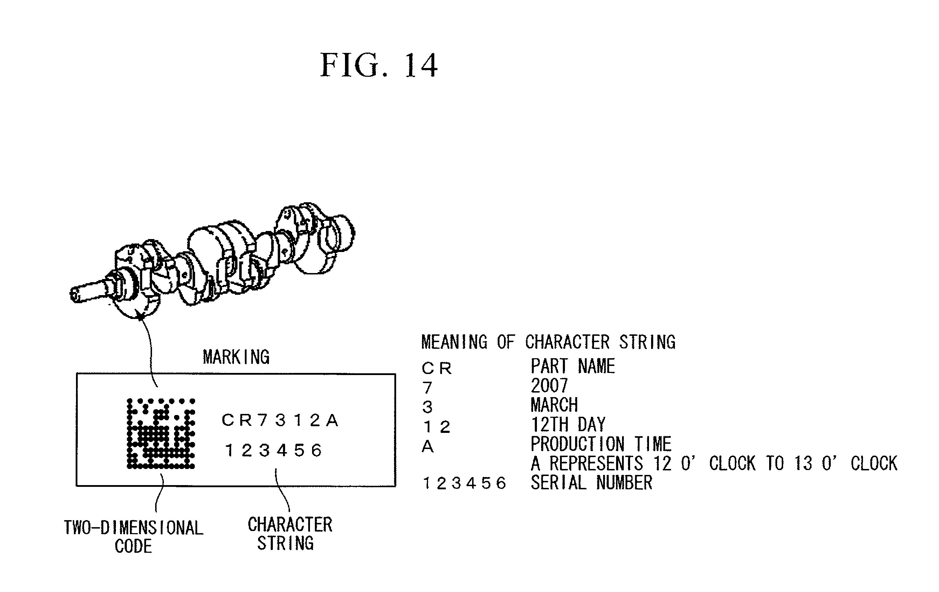

FIG. 14 shows an example where marking is actually performed on an automobile part, such as a crankshaft. Here, a two-dimensional code and character strings are marked in parallel. The character strings are, for example, character strings "CR7312A" and "123456". In this case, "CR" represents the part name, "7" represents 2007, "3" represents March, "12" represents the 12th day, and "A" represents the production time. With regard to the production time, symbols are appended in accordance with a predetermined rule. For example, "A" represents 12 o'clock to 13 o'clock, "B" represents the next time zone, and the like. "123456" represents, for example, the serial number.

This simple information is marked as a character string, but the two-dimensional code must be read so as to specifically obtain accurate information. In order to read the two-dimensional code, a two-dimensional code reading device (hereinafter, referred to as 2D reader) for converting the two-dimensional code into a character string and outputting the character string needs to be provided.

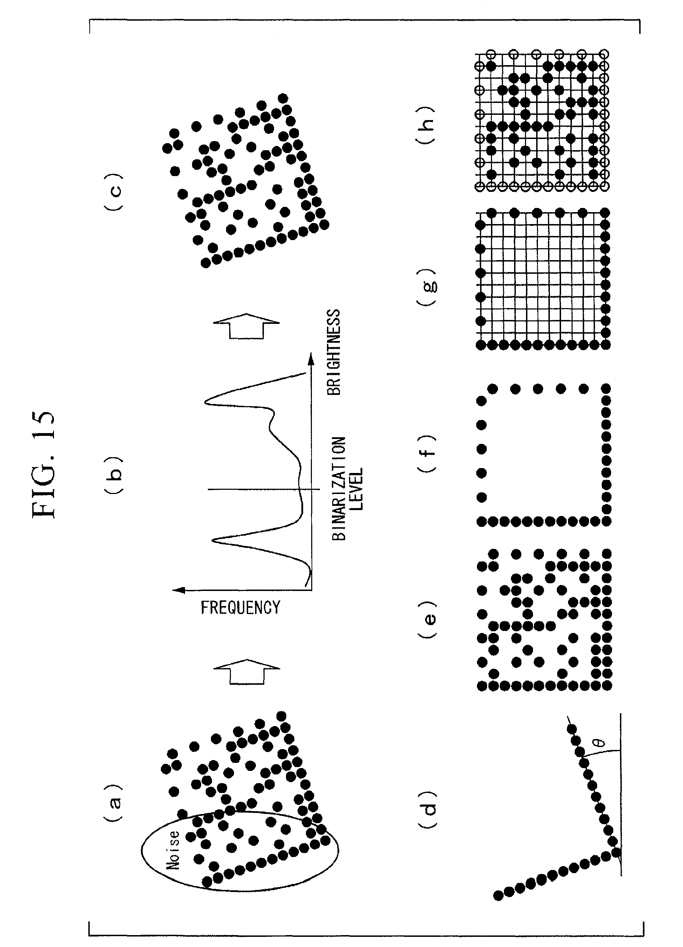

The parts (a) to (h) of FIG. 15 show an example of a procedure of the 2D reader to read a two-dimensional code. First, as shown in the part (a), the 2D reader captures the image of the marked 2D code. At this time, for example, it is assumed that the 2D code is inclined with respect to the image capturing, and noise due to blotting is present at the left end (Step S501). As shown in the part (b), the 2D reader analyzes captured data and creates a histogram with respect to brightness (Step S502). As shown in the part (c), the brightness is binarized by using the calculated threshold value based on the histogram to extract the pattern distribution of dots of the 2D code (Step S503).

Next, as shown in the part (d), the 2D reader extracts the finder pattern from captured data, and calculates a rotation angle θ which is the inclination with respect to the image capturing (Step S504). As shown in the part (e), the 2D reader performs rotation correction captured data based on the rotation angle θ (Step S505), and as shown in the part (f), extracts the above-described timing pattern (Step S506). Next, as shown in the part (g), dots corresponding to the dots of the finder pattern are extracted from the timing pattern to calculate the positions of data dots (Step S507), and as shown in the part (h), a dot pattern is extracted from the calculated positions of the dots (Step S508).

A character string is restored from the extracted dot pattern in accordance with the above-described standard. Here, the 2D reader performs a data recovery process (decoding) from the extracted data dots, for example, by the Reed-Solomon code (Step S509, not shown). In this manner, the 2D reader extracts the character string from the 2D code (Step S510, not shown). This is an example where the two-dimensional code reading procedure is generalized and conceptualized, and the actual reading procedure may differ depending on the reader manufacturer.

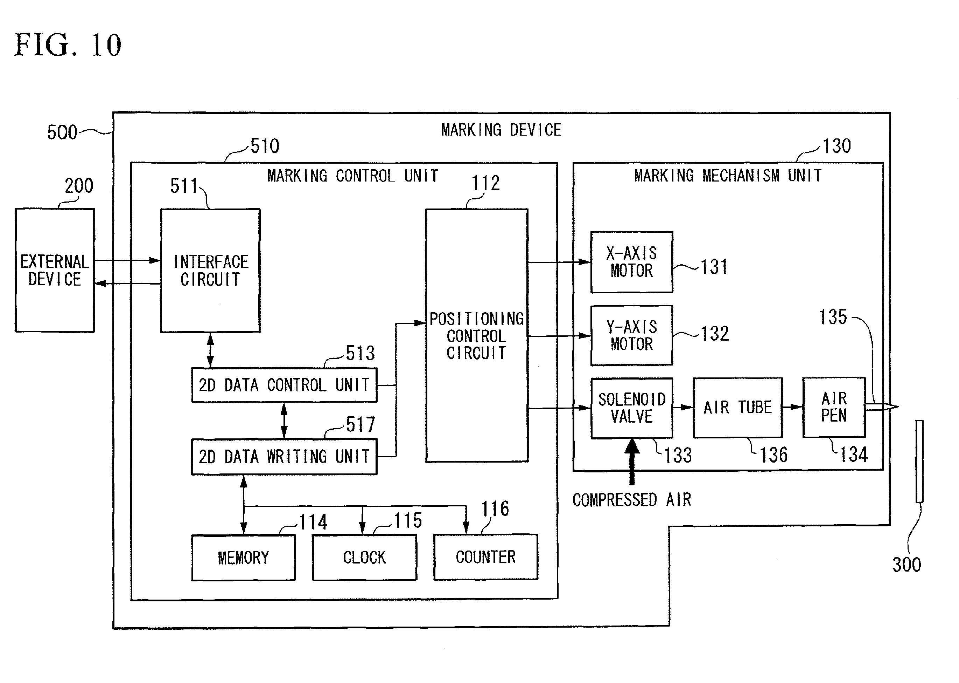

FIG. 10 is a block diagram showing the configuration of a marking device 500 according to the related art.

The marking device 500 according to the related art includes a marking control unit 510 and a marking mechanism unit 130, and can perform information communication with an external device 200.

The marking control unit 510 is a main control unit of the marking device 500, and includes, for example, an interface circuit unit 511, a positioning control circuit 112, a 2D data control unit 513, a 2D data reading unit 517, a memory 114, a clock 115, and a counter 116.

The interface circuit unit 511 performs communication with the external device 200. The positioning control circuit 112 controls the operation of the marking mechanism unit 130 based on control information which is received from the 2D data control unit 513. The 2D data control unit 513 performs control, for example, converting marking information, which is character string information received through the interface circuit unit 511, into 2D code information. The 2D data reading unit 517 transmits an engraving command to a solenoid valve 133 through the positioning control circuit 112 based on the 2D code information converted by the 2D data control unit 513. The memory 114 stores a program necessary for marking, marking information, 2D code information, and the like. The clock 115 has a timer function and outputs time information at the time of reception of a time information request in the year-month-day format in response to the time information request. The counter 116 outputs a unique serial number in response to a serial number request.

The marking mechanism unit 130 (engraving unit) is a hardware mechanism for performing marking, and includes, for example, an X-axis motor 131, a Y-axis motor 132, a solenoid valve 133, an air pen 134, a stylus 135, and an air tube 136.

The X-axis motor 131 moves the air pen 134 in the X-axis direction in accordance with control information which is received from the positioning control circuit 112. The X-axis direction refers to a direction which crosses the Y shaft at the right angle on the same plane as the Y-axis direction described below. The Y-axis motor 132 moves the air pen 134 in the Y-axis direction in accordance with control information which is received from the positioning control circuit 112.

The solenoid valve 133 supplies compressed air to the air pen 134 through the air tube 136 in accordance with control information from the positioning control circuit 112. The air pen 134 includes the stylus 135 for performing engraving on a marking object 300. The stylus 135 protrudes from the air pen 134 when compressed air from the air tube 136 is applied and collides against the marking object 300 to form a mortar-shaped depression (dot) on the surface of the marking object 300. If the supply of compressed air from the solenoid valve 133 stops, the stylus 135 is retracted into the air pen 134.

The marking object 300 is an object on which a 2D code is to be marked and is, for example, an automobile part, such as a crankshaft.

The external device 200 transmits marking information, such as the part name and the like, to the marking control unit 510.

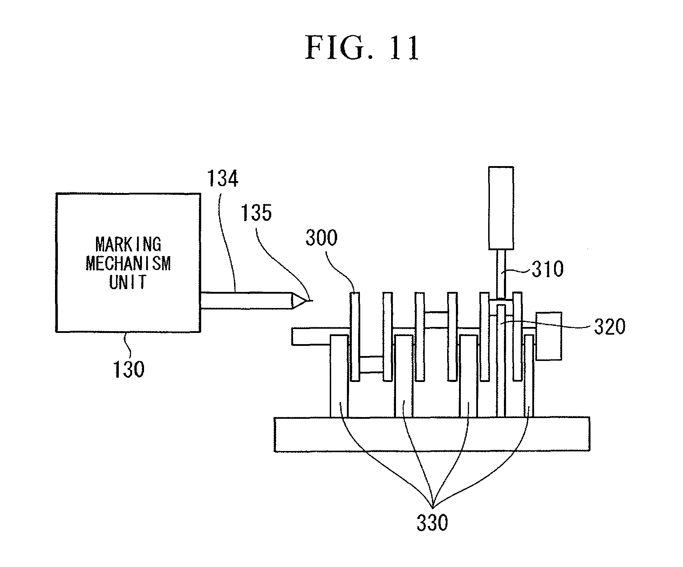

FIG. 11 shows an installment example of the marking object 300 according to the related art. The marking object 300 is a crankshaft. The marking object 300 is supported by a receiving fitting 330, and is fixed by a rotation stopper 320 for preventing misalignment in the rotation direction and a fixing clamper 310 for fixing the marking object 300 during marking.

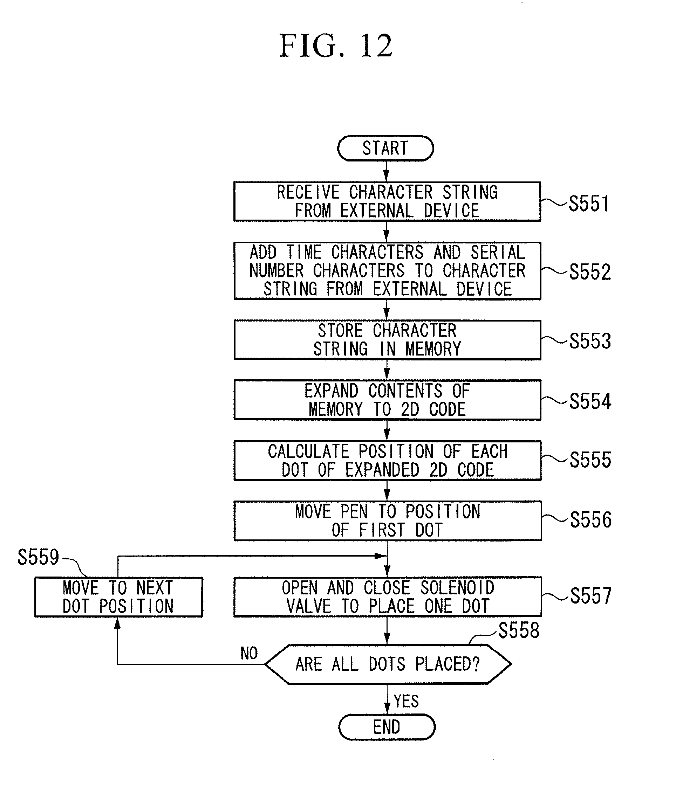

Next, the operation of the marking device according to the related art will be described with reference to FIG. 12.

If the marking object 300 is fixed and installed so as not to be moved during marking, the external device 200 transmits character string information (hereinafter, referred to as marking information) to be marked on the marking object 300 to the interface circuit unit 511 (Step S551). The marking information is, for example, the part number or the like. The interface circuit unit 511 transfers the received marking information to the 2D data control unit 513. The 2D data control unit 513 acquires current time information from the clock 115, acquires serial number information from the counter 116, and adds the current time information and the serial number information to the marking information received from the interface circuit unit 511 (Step S552).

The 2D data control unit 513 converts the marking information into a 2D code in accordance with a predetermined standard to generate 2D code information. The 2D data control unit 513 stores the 2D code information in the memory 114 (Step S553).

When receiving a marking start signal from the external device 200, the 2D data reading unit 517 reads 2D code information from the memory 114 (Step S554) and transfers the 2D code information to the positioning control circuit 112. The positioning control circuit 112 calculates the engraving positions of the dots based on the received 2D code information (Step S555).

The positioning control circuit 112 operates the marking mechanism unit 130 based on the calculated engraving positions of the dots. The positioning control circuit 112 rotates the X-axis motor 131 and the Y-axis motor 132 to move the air pen 134 (Step S556). After the air pen 134 has been moved by the X-axis motor 131 and the Y-axis motor 132, the 2D data reading unit 517 drives the solenoid valve 133. When this happens, compressed air is supplied to the air pen 134 through the air tube 136. Then, the stylus 135 protrudes by compressed air and collides against the marking object 300 to form a dot on the marking object 300 (Step S557). After the dot is formed on the marking object 300, the 2D data reading unit 517 stops the driving of the solenoid valve 133. In this manner, one dot is marked. Steps S557 to S559 are repeatedly performed to mark all the dots of the 2D code.

If all the dots have been formed, the 2D data reading unit 517 notifies a marking completion signal to the external device 200. If marking is completed, the marking object 300 is unfixed.

[Patent Document 1] Japanese Unexamined Patent Application, First Publication No. 2005-305475

Disclosure of the Invention

Problem to be solved by the Invention

However, the following conditions need to be satisfied so as to mark the two-dimensional code without abnormality: (1) compressed air is normally supplied to the solenoid valve; (2) the solenoid valve is correctly operated in accordance with a command from the marking device; (3) there is no air leakage due to breakage of the air tube; (4) the air pen can control the position of the stylus in accordance with the presence/absence of compressed air; (5) the stylus collides normally against the marking object; and (6) the marking mechanism unit can be positioned in accordance with the command from the marking device.

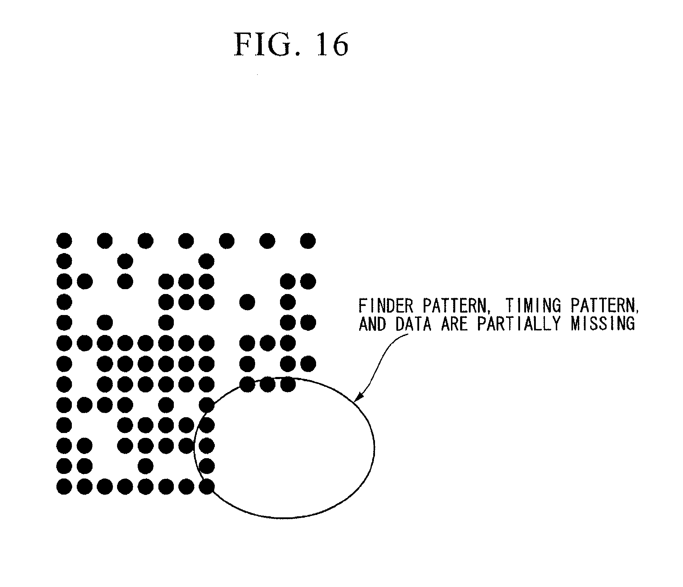

If the above-described conditions are all satisfied without abnormality, typically, the 2D code is marked normally, but some dots may not be marked normally due to a reduction in air pressure or a temporary blackout. For example, FIG. 16 shows the marking result when marking is not performed normally due to the above-described causes. Here, the dots in the lower right portion are missing, so data cannot be restored from this marking.

When the marking control unit automatically adds the time or serial number during marking, it may be impossible to determine subsequently which time or serial number is correct.

As described above, the marking device according to the related art can mark the 2D code, but it cannot determine whether or not the marking result is normal.

The invention has been finalized in consideration of the above-described situation, and provides a marking device capable of determining whether or not marking is performed normally.

Means for Solving the Problem

In order to solve the above-described problem, the invention provides a marking device. The marking device includes a two-dimensional code forming unit converting first identification information into two-dimensional code information in accordance with a predetermined standard and forming a two-dimensional code on an object based on the two-dimensional code information, a two-dimensional code reading unit reading the two-dimensional code and generating second identification information in accordance with the standard, and a determination unit determining whether or not the first identification information matches the second identification information.

The marking device may further include a warning unit outputting a warning when the determination unit has determined that the first identification information does not match the second identification information.

The two-dimensional code forming unit may include an engraving unit performing engraving on the object by a collision force, a laser head, or an ink-jet head.

In the marking device, when the two-dimensional code forming unit includes the engraving unit, the two-dimensional code reading unit may detect bright and dark regions from an engraved mark of the two-dimensional code based on a predetermined threshold value, and may calculate the ratio of a region detected as a dark region to a bright region surrounded by the dark region. The marking device may further include second warning means for outputting a second warning when the ratio exceeds a threshold value set in advance.

In the marking device, the two-dimensional code forming unit may form a two-dimensional code again on the object based on the two-dimensional code information when the determination unit determines that the first marking information does not match the second marking information.

The invention provides a marking method. The marking method includes the steps of converting first identification information into two-dimensional code information in accordance with a predetermined standard, forming a two-dimensional code on an object based on the two-dimensional code information, reading the two-dimensional code and generating second marking information in accordance with the standard, and determining whether or not the first marking information matches the second marking information.

The invention also provides a marking program which causes a computer to execute the steps of converting first identification information into two-dimensional code information in accordance with a predetermined standard, forming a two-dimensional code on an object based on the two-dimensional code information, reading the two-dimensional code and generating second marking information in accordance with the standard, and determining whether or not the first marking information matches the second marking information.

Advantages of the Invention

As described above, according to the invention, the two-dimensional code information formed on the object is read so as to determine whether or not marking is performed normally. Therefore, parts with defective marking can be detected.

Brief Description of the Drawings

FIG. 1 is a diagram showing a marking device according to a first embodiment of the invention.

FIG. 2 is a diagram showing an installment example of a marking object in the first embodiment.

FIG. 3 is a diagram showing an example of a 2D code to be marked in the first embodiment.

FIG. 4 is a diagram illustrating wear on a stylus in this embodiment.

FIG. 5A is a diagram showing the configuration of a command to be communicated in the first embodiment.

FIG. 5B is a diagram showing the configuration of a command to be communicated in the first embodiment.

FIG. 5C is a diagram showing the configuration of a command to be communicated in the first embodiment.

FIG. 6 is a flowchart showing a 2D code reading process in the first embodiment.

FIG. 7 is a flowchart showing a 2D code determination process in the first embodiment.

FIG. 8 is a diagram showing a marking device according to a second embodiment of the invention.

FIG. 9 is a diagram showing a marking device according to a third embodiment of the invention.

FIG. 10 is a block diagram showing the configuration of a marking device according to the related art.

FIG. 11 is a diagram showing an installment example of a marking object in the related art.

FIG. 12 is a flowchart showing the operation of the marking device in the related art.

FIG. 13 is a diagram showing an example of erroneous reading of marking in the related art.

FIG. 14 is a diagram showing an example where a 2D code and character strings are marked.

FIG. 15 is a diagram showing an example of a procedure of a 2D reader to read a two-dimensional code in parts (a) to (h).

FIG. 16 is a diagram showing the marking result when marking is not performed normally.

Description of Reference Symbols

    100, 201, 310: marking device
    110, 211, 311: marking control unit
    111: interface circuit unit
    112: positioning control circuit
    113: 2D data control unit
    114: memory
    115: clock
    116: counter
    117: 2D data warning unit
    118: warning unit
    119: marking result determining unit
    120: 2D reader interface
    130, 231, 331: marking mechanism unit
    131: X-axis motor
    132: Y-axis motor
    133: solenoid valve
    134: air pen
    135: stylus
    136: air tube
    140, 240, 340: 2D reader
    141: mounting angle
    200: external device
    300: marking object
    310: fixing clamper
    320: rotation stopper
    330: receiving fitting
    235: laser head
    335: ink-jet head

Best Mode for Carrying Out the Invention

Hereinafter, an embodiment of the invention will be described with reference to the drawings.
First, the summary of the invention will be described. A marking device according to this embodiment includes a two-dimensional code reading device (hereinafter, referred to as 2D reader). The marking device compares written marking information with the character string read by the 2D reader. If the comparison result indicates a match, it is determined that the marking is normally performed, and if the comparison result indicates no match, it is determined that the marking is defective, and the marking device outputs a warning to the external device. When an error occurs, the marking device forms a two-dimensional code again, such that parts with defective marking do not enter the subsequent process.

[First Embodiment]

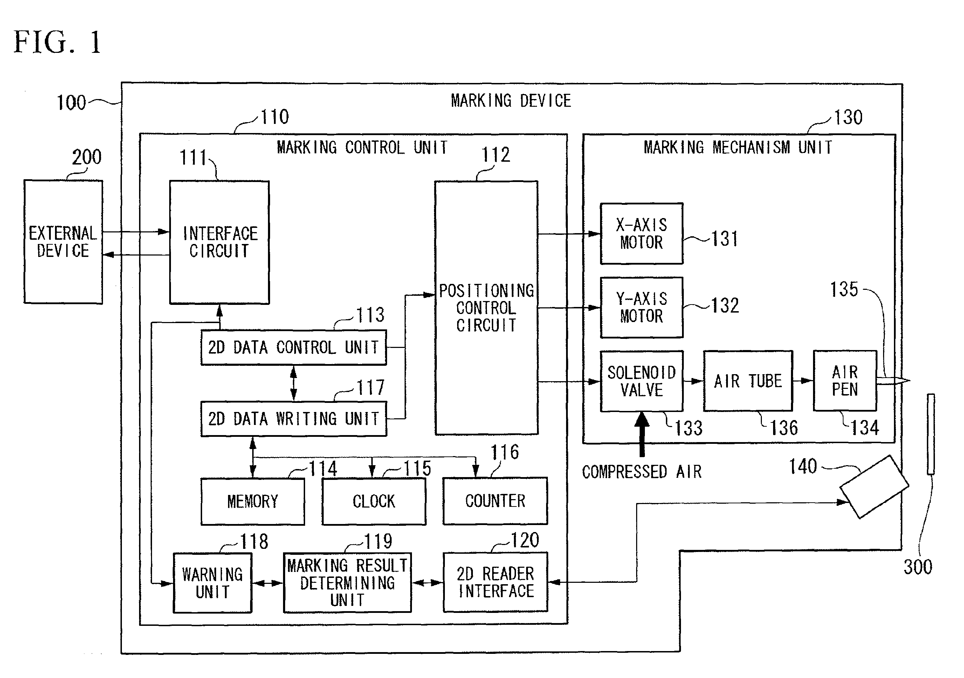

Hereinafter, a first embodiment of the invention will be described with reference to FIGS. 1 to 7. FIG. 1 is a block diagram showing the configuration of a marking device 100 according to this embodiment. The same elements as those in the marking device 500 of FIG. 10 are represented by the same reference symbols, and descriptions thereof will be omitted.

The marking device 100 includes a 2D reader 140 (a two-dimensional code reading unit). The 2D reader 140 detects bright and dark regions from an engraving result based on a predetermined threshold value. Specifically, the 2D reader 140 irradiates light onto the surface of a marked 2D code by using a light source, and generates 2D code information according to white and black or bright and dark based on the collection result of reflected light by using a lens, and generates character string information as marking information based on the 2D code information in accordance with a predetermined standard.

The 2D reader 140 calculates the ratio of a region detected as a dark region among the detected bright and dark regions to a bright region surrounded by the dark region. That is, the 2D reader 140 detects the toroid ratio of each dot constituting the marked 2D code information. The toroid ratio will be described below.

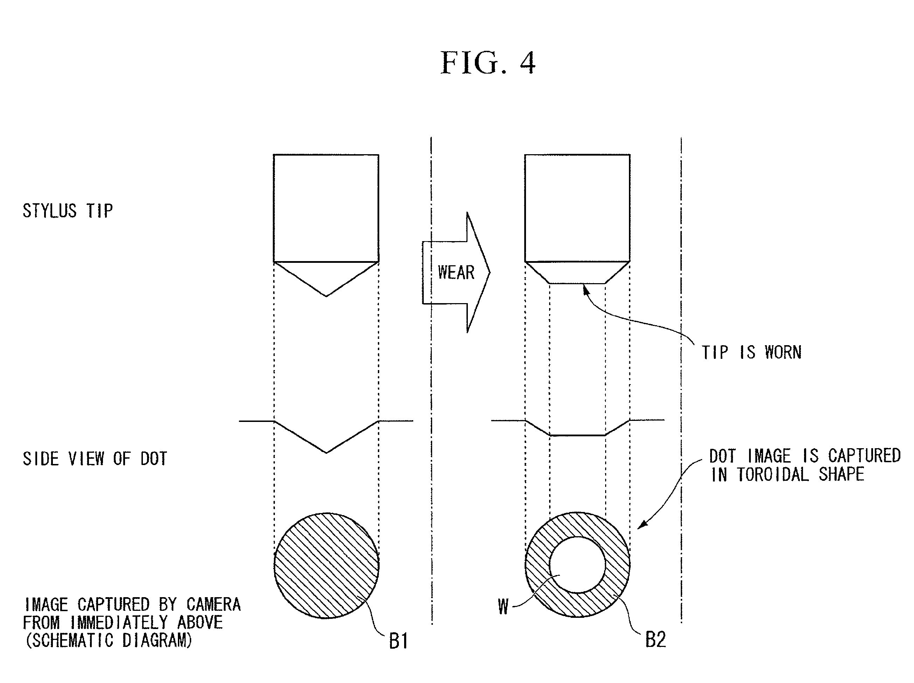

As shown in FIG. 4, the stylus of the air pen of the marking device is typically made of a superhard material. In this case, each time marking is repeated, the tip of the stylus is worn and rounded. As a result, if the engraved dot image is captured, in a state where the tip of the stylus is slightly worn, the engraved surface has a substantially conical shape due to the intensity of reflective light, and a black dot is detected (dark region B1). Meanwhile, if the tip of stylus is more worn, the central portion of the dot is smoothed regardless of being engraved. In the smoothed portion, light is specularly reflected. Accordingly, the captured dot image has a central portion in white (bright region W) and a circumferential portion in black (dark region B2). As the whole of the dot, the dot image is captured in a toroidal shape.

Accordingly, if the bright region W surrounded by the toroidal dark region B2 increases, it is considered that the stylus is more worn. The toroid ratio is defined as follows assuming that the area of the bright region W is S1 and the area of the dark region B2 is S2.

$$\text{Toroid Ratio} = (S2/(S1+S2)) \times 100 \ (\%)$$

When the bright region W is not present (S1=0), the toroid ratio is 100%. If the numerical value of the toroid ratio decreases, it is considered that the stylus is more worn. Thus, it can be determined that it is time to replace the stylus when the toroid ratio is less than a certain numerical value.

The marking control unit 110 (two-dimensional code forming unit) includes a 2D reader interface 120, a marking result determining unit 119, and a warning unit 118.

The 2D reader interface 120 is, for example, a circuit for controlling the operation of the 2D reader 140. The 2D reader interface 120 transfers information read by the 2D reader 140 to the marking result determining unit 119.

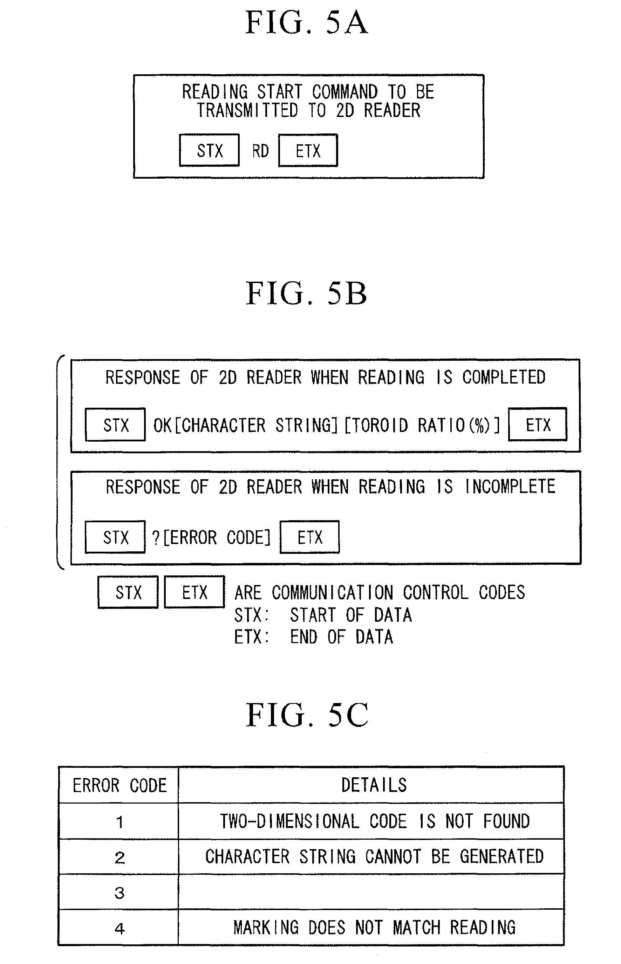

Information communication between the 2D reader 140 and the 2D reader interface 120 is performed by serial communication based on the RS232C standard or the like, for example. Information including "STX" which is a communication control code indicating the start of data, an actual data portion, and "ETX" which is a communication control code indicating the end of data is communicated. For example, as shown in FIG. 5A, a reading start command from the 2D reader interface 120 to the 2D reader 140 is made by transmitting a command, such as "STX RD ETX" or the like. Here, "RD" means "READ".

With regard to information read by the 2D reader 140, character string information which is restored in accordance with a predetermined standard and the toroid ratio when information is read are transmitted as a command, such as "STX OK (restored character string) (toroid ratio) ETX" or the like, as shown in FIG. 5B.

When the 2D reader 140 has failed to read the 2D code, a command, such as "STX (error code) ETX" or the like is transmitted. Here, the error code has, for example, a code system shown in FIG. 5C. An error code "1" represents "two-dimensional code is not found", and an error code "2" represents "character string cannot be generated (cannot be restored)". When the error code is transmitted to the external device 200, the marking result determining unit 119 may generate an error command including an error code "4" indicating that marking information stored in the memory 114 does not match the read character string, as an error code to be additionally added by the marking result determining unit 119.

The marking result determining unit 119 outputs determination result information regarding whether or not marking information stored in the memory 114 matches read information received from the 2D reader 140 through the 2D reader interface 120.

The warning unit 118 outputs warning information to the external device 200 through the interface circuit unit 111 in accordance with the result information which is received from the marking result determining unit 119.

The 2D data control unit 113 of this embodiment has a function of performing engraving again in accordance with the determination result information which is output from the marking result determining unit 119.

FIG. 2 shows an installment example of the marking object 300 according to this embodiment. The 2D reader 140 is mounted on the side surface of the marking device by a mounting angle 141, for example. It is assumed that the visual field for image capturing of the 2D reader 140 is set so as to capture at least the image of the entire marked 2D code.

Next, an operation example of the marking device 100 of this embodiment will be described.

<2D Code Reading Process>

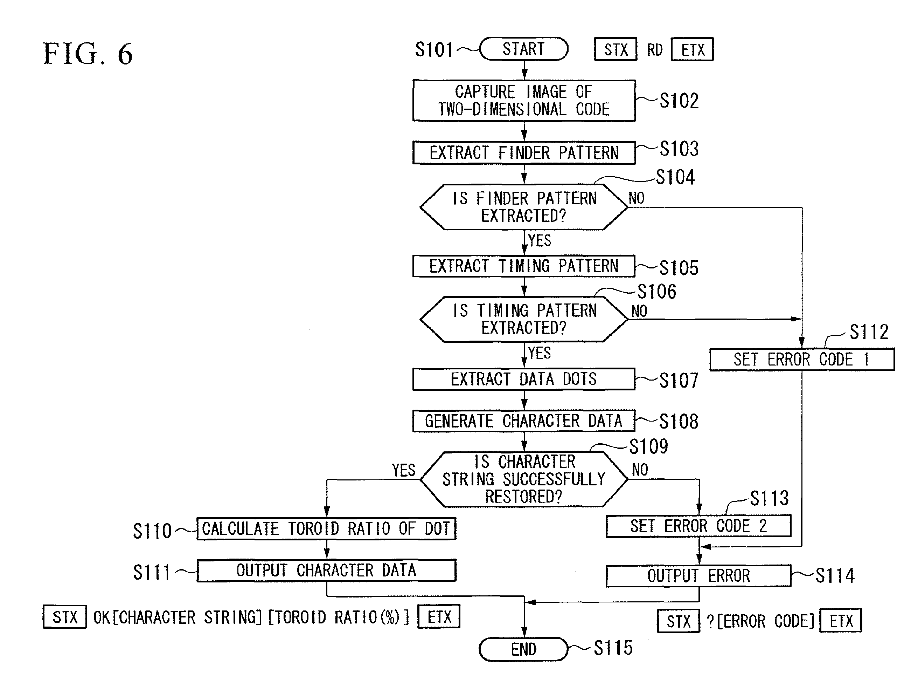

FIG. 6 is a flowchart showing an operation example of a 2D code reading process in which the 2D reader 140 reads the marked 2D code.

The 2D reader 140 receives the reading start command as a command, such as "STX RD ETX" or the like (Step S101). The 2D reader 140 captures the image of the 2D code in accordance with the received reading start command (Step S102). The 2D reader 140 extracts a finder pattern from the read 2D code information (Steps S103 and S104). If the finder pattern cannot be extracted, the 2D reader 140 generates an error command including the error code "1" (Step S112), and outputs the error command (Step S114).

Meanwhile, if the finder pattern can be extracted in Step S104, the 2D reader 140 extracts a timing pattern (Steps S105 and S106). If the timing pattern cannot be extracted, the 2D reader 140 generates an error command including the error code "1" (Step S112), and outputs the error command (Step S114).

Meanwhile, if the timing pattern can be extracted in Step S106, the 2D reader 140 extracts data dots (Step S107).

The 2D reader 140 restores character string information from the extracted data dots in accordance with a predetermined standard (Steps S108 and S109). If the recovery of the character string has failed, the 2D reader 140 generates an error command including the error code "2" (Step S113), and outputs the error command as a result command (Step S114).

Meanwhile, if the character string is successfully restored in Step S109, the 2D reader 140 calculates the toroid ratio of each read dot (Step S110). Next, the 2D reader 140 generates a result command including the restored character string and the toroid ratio and outputs the result command (Step S111). Then, the 2D reader 140 ends the 2D code reading process (Step S115).

<2D Code Determination Process>

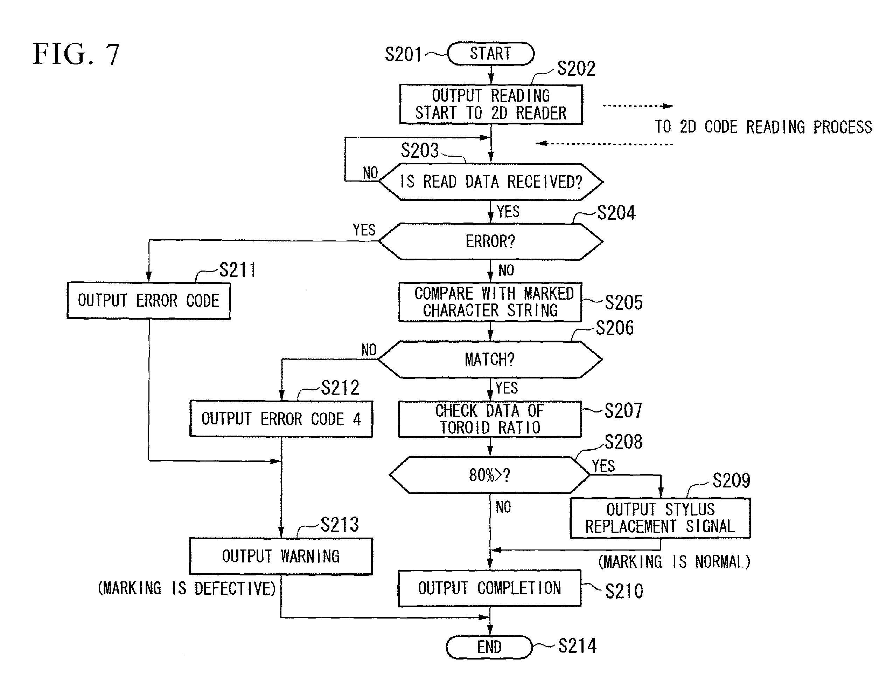

FIG. 7 is a flowchart showing an operation example of a 2D code determination process in which the marking device 100 determines marking information read by the 2D reader 140.

If the marking operation on the marking object 300 by the marking mechanism unit 130 (two-dimensional code forming unit) is completed, the marking result determining unit 119 transmits a reading start command to the 2D reader 140 through the 2D reader interface 120 (Steps S201 and S202). The reading start command which is transmitted from the 2D reader interface 120 to the 2D reader 140 is, for example, the command "STX RD ETX" or the like. The 2D reader interface 120 receives the result command which is the result of the 2D code reading process by the 2D reader 140 (Step S203), and transfers the result command to the marking result determining unit 119.

If the received result command includes an error code, the marking result determining unit 119 transfers the error command to the warning unit 118 (Step S204). Note that, if the result command includes an error code, the marking result determining unit 119 may transmit the error command to the 2D data control unit 113, not to the warning unit 118. In this case, the 2D data control unit 113 may perform marking again through the 2D data writing unit 117.

If an error command is received, the warning unit 118 outputs warning information to the external device 200 (Steps S211 and S213). The external device 200 which receives warning information may display an error warning, for example, on a computer display, or may trigger an alarm.

Meanwhile, if the result command received in Step S204 includes no error code, the marking result determining unit 119 acquires marking information from the memory 114, and compares the marking information with the restored character string included in the result command (Step S205). If it is determined that the marking information does not match the restored character string (Step S206), the marking result determining unit 119 generates an error command including the error code "4" and outputs the error command (Step S212). The warning unit 118 outputs warning information to the external device 200 (Step S213).

Meanwhile, if it is determined in Step S206 that the marking information matches the restored character string, the marking result determining unit 119 detects toroid ratio information from the result command.

If it is determined that the detected toroid ratio information is equal to or more than a predetermined threshold value (for example, 80%) (that is, the stylus has not reached the wear limit) (Step S208), the marking result determining unit 119 outputs to the external device 200 the determination result that 2D code determination is possible (Step S210). Meanwhile, if the marking result determining unit 119 determines in Step S208 that toroid ratio information is less than a predetermined threshold value (for example, 80%) (that is, the stylus has reached the wear limit), the warning unit 118 outputs stylus replacement warning information (Step S209).

With regard to the toroid ratio determination in Step S208, the threshold value is set to 80%, but this numerical value is a wear limit determination numerical value for determining the wear limit of the stylus, and is set in advance by the user depending on the material or the like of the stylus. If the wear limit determination numerical value is set large, the replacement cycle of the stylus decreases, but ease of reading of the marked 2D code can be ensured. Meanwhile, if the wear limit determination numerical value is set small, the replacement cycle of the stylus increases, but the readability of the marked 2D code varies significantly. Accordingly, the numerical value is also determined in accordance with the situation of the workplace. In this manner, the wear determination can be performed in accordance with the toroid ratio so as to determine the replacement time of the stylus. That is, the determination result can be provided to a higher-level system through the external device 200 so as to provide information regarding preventive maintenance.

In this embodiment, when it is determined that the 2D code is not marked normally, a completion notification may not be transmitted to the external device 200, and marking with the same contents may be performed again. Therefore, even though temporary defective marking is performed due to a rapid change in the compressed air or a temporary blackout, if the 2D code determination process is performed after marking is performed again, parts with defective marking can be prevented from entering the subsequent process.

As described above, according to the invention, it is possible to verify whether or not the 2D code can be correctly marked, so parts with defective marking can be prevented from entering the subsequent process.

When the determination result of the marking result determining unit 119 according to this embodiment is stored, even though the 2D code is not read in the subsequent process, the determination result serves as the basis for proving that there is no problem in the marking device. That is, a cause examination time can be expected to be shortened when the 2D code is not read in the subsequent process.

According to this embodiment, the replacement time of the stylus of the air pen can be detected based on the toroid ratio of the dot output from the 2D reader. In the related art, the replacement time of the stylus was predicted from the number of times characters or a 2D code was marked, regardless of the amount of wear of the stylus. According to this method, the prediction of wear of the stylus varies due to variation in the hardness of the marking object or variation in the working accuracy of the stylus. For this reason, the amount of wear of the stylus is measured while marking is actually performed, and the guide for stylus replacement is set. Accordingly, a stylus which can be sufficiently used is unconditionally replaced when a predetermined number of characters are marked or a two-dimensional code is marked, which is economically wasteful.

In contrast, according to this embodiment, the degree of wear of the stylus can be determined by the toroid ratio, so it is not necessary to measure the number of characters or the like for stylus replacement. Further, the stylus can be used insofar as the degree of wear does not prevent engraving from being performed normally, and thus an economical effect can be obtained.

In this embodiment, only the determination of the stylus replacement time according to the toroid ratio has been described, but information regarding contrast, the number of deficient data dots, the degree of dot alignment, and the like can be obtained by the use of some 2D readers.

These kinds of information may be used to specify the positions of dots where marking is impossible due to a change in the roughness or color of the marking surface of the marking object, and to restore dots by re-marking. Furthermore, monitoring of the amount of dust generated in the marking mechanism unit, determination of the maintenance time, or the like, may be achieved based on the degree of dot alignment.

Marking according to this embodiment may be performed by the marking device according to the related art provided with the 2D reader 140, the 2D reader interface 120, the marking result determining unit 119, and the like.

[Second Embodiment]

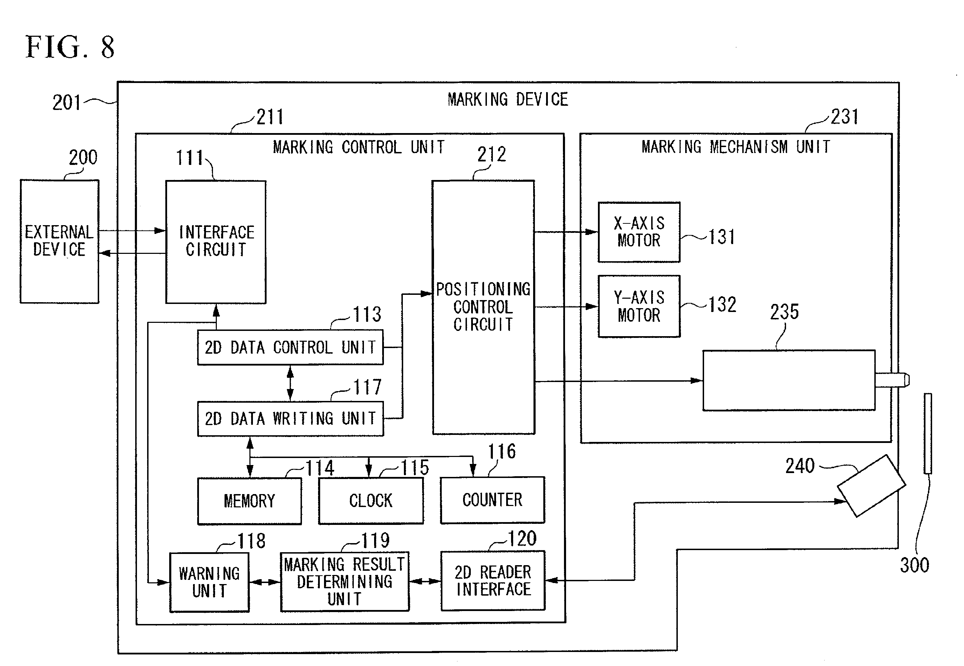

Next, a second embodiment of the invention will be described with reference to FIG. 8. FIG. 8 is a block diagram showing the configuration of a marking device 201 according to the second embodiment. The marking device 201 of the second embodiment is different from the marking device 100 of the first embodiment in that laser light, not an air pen, is used to form a two-dimensional code on the marking object 300. In FIG. 8, the same elements as those in the marking device 100 of the first embodiment shown in FIG. 1 are represented by the same reference symbols, and descriptions thereof will be omitted.

The marking device 201 includes, as a two-dimensional code forming unit, a marking control unit 211 and a marking mechanism unit 231, and can perform information communication with the external device 200.

The marking control unit 211 is a main control unit of the marking device 201, and includes, for example, an interface circuit unit 111, a positioning control circuit 212, a 2D data control unit 113, a 2D data writing unit 117, a memory 114, a clock 115, and a counter 116.

The marking mechanism unit 231 is a hardware mechanism for performing marking, and includes an X-axis motor 131, a Y-axis motor 132, and a laser head 235. The X-axis motor 131 and the Y-axis motor 132 respectively move the laser head 235 in the X-axis direction and the Y-axis direction in accordance with a positioning signal which is received from the positioning control circuit 212. The positioning control circuit 212 transmits an irradiation control signal for controlling on/off of laser light irradiation and the intensity of laser light to the laser head 235, in addition to the positioning signal. The intensity of laser light is preferably determined in accordance with the material and surface roughness of the marking object 300, the size of a dot to be formed, and the like. The laser head 235 is positioned in accordance with the positioning signal which is received from the positioning control circuit 212, irradiates laser light onto the marking object 300 in accordance with the irradiation control signal, and partially melts (and volatilizes) the marking object 300 to form a two-dimensional code on the marking object 300.

In the above description, the laser head 235 is moved by the X-axis motor 131 and the Y-axis motor 132, but when the marking object 300 has a comparatively light weight, or the like, the laser head 235 may be fixed and the marking object 300 may be moved in the X-axis direction and in the Y-axis direction.

The marking device 201 includes a 2D reader 240 (two-dimensional code reading unit). The 2D reader 240 preferably has a configuration different from the 2D reader 140 of the first embodiment such that the two-dimensional code (dots) formed on the marking object 300 is appropriately detected by using laser light. As the 2D reader interface which is connected to the 2D reader 240, the same 2D reader interface 120 as that in the first embodiment may be used.

If the marking operation on the marking object 300 by the marking mechanism unit 231 is completed, the two-dimensional code is read by the 2D reader 240, and a reading result command is transferred to the marking result determining unit 119 through the 2D reader interface 120. If the received result command includes an error code, the marking result determining unit 119 transfers an error command to the warning unit 118. If the error command is received, the warning unit 118 outputs warning information to the external device 200. The external device 200 which receives the warning information may display an error warning, for example, on a computer display, or may trigger an alarm.

When the marking result determining unit 119 determines that the two-dimensional code is not marked normally, warning information may be output as described above and marking may also be performed again with the same contents.

As described above, according to the second embodiment, it is possible to verify whether or not the two-dimensional code can be marked normally. Therefore, even though temporary defective marking is performed due to a failure in the laser head 235, a temporary blackout of the power supply, non-uniformity of the surface state of the marking object 300, or the like, parts with defective marking can be prevented from entering the subsequent process. In the first embodiment, the stylus 135 inevitably becomes worn, and strictly, the shape of each dot formed on the surface of the marking object 300 is changed even within the tolerance. In contrast, in the second embodiment, the use of laser light ensures the shape of each dot to be constantly uniform insofar as the laser head 235 is normal and the surface state of the marking object 300 is uniform. Further, it is advantageous in that part replacement is basically unnecessary and a work interruption time for part replacement is unnecessary.

[Third Embodiment]

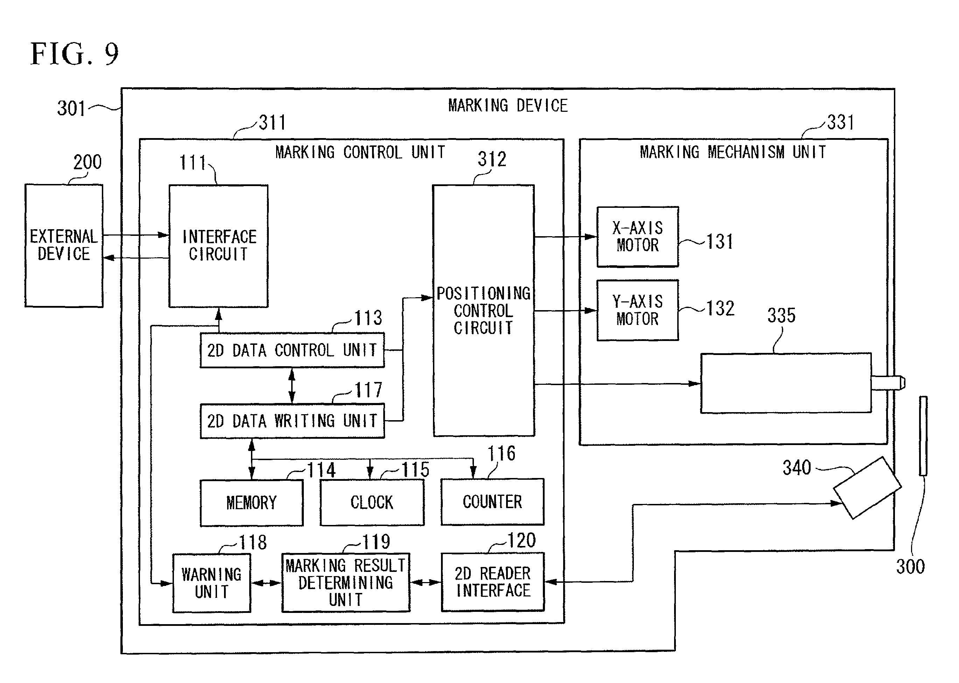

Next, a third embodiment of the invention will be described with reference to FIG. 9. FIG. 9 is a block diagram showing the configuration of a marking device 301 according to the third embodiment. The marking device 301 of the third embodiment is different from the marking device 100 of the first embodiment in that an ink-jet process, not an air pen, is used to form a two-dimensional code on the marking object 300. In FIG. 9, the same elements as those in the marking device 100 of the first embodiment shown in FIG. 1 are represented by the same reference symbols, and descriptions thereof will be omitted.

The marking device 301 includes, as a two-dimensional code forming unit, a marking control unit 311 and a marking mechanism unit 331, and can perform information communication with the external device 200.

The marking control unit 311 is a main control unit of the marking device 301, and includes, for example, an interface circuit unit 111, a positioning control circuit 312, a 2D data control unit 113, a 2D data writing unit 117, a memory 114, a clock 115, and a counter 116.

The marking mechanism unit 331 is a hardware mechanism for performing marking, and includes an X-axis motor 131, a Y-axis motor 132, and an ink-jet head 335. The X-axis motor 131 and the Y-axis motor 132 respectively move the ink-jet head 335 in the X-axis direction and the Y-axis direction in accordance with a positioning signal which is received from the positioning control circuit 312. The positioning control circuit 312 transmits an ejection control signal for controlling on/off of the ink-jet and the amount of ink ejection to the ink-jet head 335, in addition to the positioning signal. The amount of ink ejection is preferably determined in accordance with the size of a dot to be formed on the marking object 300. The material and color of ink are preferably determined in accordance with the material and surface color of the marking object 300. The ink-jet head 335 is positioned by the positioning signal which is received from the positioning control circuit 312, and ejects ink onto the marking object 300 in accordance with the ejection control signal to form the two-dimensional code on the marking object 300.

In the above description, the ink-jet head 335 is moved by the X-axis motor 131 and the Y-axis motor 132, but when the marking object 300 has a comparatively light weight, or the like, the ink-jet head 335 may be fixed and the marking object 300 may be moved in the X-axis direction and the Y-axis direction.

The marking device 301 includes a 2D reader 340 (two-dimensional code reading unit). The 2D reader 340 preferably has a configuration different from the 2D reader 140 of the first embodiment, such that the two-dimensional code (dots) formed on the marking object 300 by an ink-jet process is appropriately detected. As the 2D reader interface which is connected to the 2D reader 340, the same 2D reader interface 120 as that in the first embodiment may be used.

If the marking operation on the marking object 300 by the marking mechanism unit 331 is completed, the two-dimensional code is read by the 2D reader 340, and a reading result command is transferred to the marking result determining unit 119 through the 2D reader interface 120. If the received result command includes an error code, the marking result determining unit 119 transfers an error command to the warning unit 118. If the error command is received, the warning unit 118 outputs warning information to the external device 200. The external device 200 which receives the warning information may display an error warning, for example, on a computer display, or may trigger an alarm.

When the marking result determining unit 119 determines that the two-dimensional code is not marked normally, warning information may be output as described above and marking may be performed again with the same contents.

As described above, according to the third embodiment, it is possible to verify whether or not the two-dimensional code can be marked normally. Therefore, even though temporary defective marking is performed due to a failure in the ink-jet head 335, a temporary blackout of the power supply, non-uniformity of the surface state of the marking object 300, or the like, parts with defective marking can be prevented from entering the subsequent process. In the first embodiment, the stylus 135 inevitably becomes worn, and strictly, the shape of each dot formed on the surface of the marking object 300 is changed even within the tolerance. In contrast, in the third embodiment, the use of an ink-jet process ensures the shape of each dot to be constantly uniform insofar as the ink-jet head 335 is normal and the surface state of the marking object 300 is uniform.

A program for implementing the functions of the processing units according to the invention may be recorded in a computer-readable recording medium, the program recorded in the recording medium is read and executed by a computer system in order to perform marking. Note that the term "computer system" includes an OS and hardware, such as peripheral devices and the like. The term "computer system" also includes a WWW system having a homepage providing environment (or display environment). The term "computer-readable recording medium" refers to a portable medium, such as a flexible disk, a magneto-optical disk, a ROM, a CD-ROM, or the like, or a storage device, such as a hard disk or the like incorporated into the computer system. The term "computer-readable recording medium" also includes a volatile memory (RAM) for storing a program for a predetermined time provided in a computer system serving as a server or a client when a program is transmitted through a network, such as the Internet, or a communication line, such as a telephone line or the like.

The program may be transmitted from a computer system, in which the program is stored in a storage device or the like, to another computer system through a transmission medium or by transmission waves in the transmission medium. The term "transmission medium" for transmitting the program refers to a medium having a function of transmitting information, including a network (communication network), such as the Internet or the like, and a communication channel (communication line), such as a telephone line or the like. The program may be for implementing part of the above-described functions. The program may be a so-called differential file (differential program) which can be obtained by combining the above-described functions with the programs which have already been recorded in the computer system.

## Claims

1. A marking device comprising:

    a two-dimensional code forming unit converting first identification information into two-dimensional code information in accordance with a predetermined standard, and forming a two-dimensional code on an object based on the two-dimensional code information;
    a two-dimensional code reading unit reading the two-dimensional code and generating second identification information in accordance with the standard; and
    a determination unit determining whether or not the first identification information matches the second identification information.

2. The marking device according to claim 1, further comprising:

    a warning unit outputting a warning when the determination unit has determined that the first identification information does not match the second identification information.

3. The marking device according to claim 1, wherein the two-dimensional code forming unit includes an engraving unit performing engraving on the object by a collision force.

4. The marking device according to claim 3, wherein the two-dimensional code reading unit detects bright and dark regions from an engraved mark of the two-dimensional code based on a predetermined threshold value, and the ratio of a region detected as a dark region to a bright region surrounded by the dark region, and when the ratio exceeds a threshold value set in advance, the marking device further includes a second warning unit outputting a second warning.

5. The marking device according to claim 1, wherein, when the determination unit has determined that the first marking information does not match the second marking information, the two-dimensional code forming unit again forms a two-dimensional code on the object based on the two-dimensional code information.

6. The marking device according to claim 1, wherein the two-dimensional code forming unit includes a laser head.

**7.** The marking device according to claim 1, wherein the two-dimensional code forming unit includes an ink-jet head.

**8.** A marking method comprising the steps of:

converting first identification information into two-dimensional code information in accordance with a predetermined standard;
forming a two-dimensional code on an object based on the two-dimensional code information;
reading the two-dimensional code and generating second marking information in accordance with the standard; and
determining whether or not the first marking information matches the second marking information.

**9.** A marking program which causes a computer to execute the steps of:

converting first identification information into two-dimensional code information in accordance with a predetermined standard;
forming a two-dimensional code on an object based on the two-dimensional code information;
reading the two-dimensional code and generating second marking information in accordance with the standard; and
determining whether or not the first marking information matches the second marking information.

# FIG. 1

EP 2 146 301 A1

# FIG. 2

141

140

VISUAL FIELD
OF 2D READER

MARKING
MECHANISM
UNIT

130

310

320

330

# FIG. 3

TIMING PATTERN

FINDER PATTERN

# FIG. 4

STYLUS TIP

WEAR

TIP IS WORN

SIDE VIEW OF DOT

DOT IMAGE IS CAPTURED
IN TOROIDAL SHAPE

IMAGE CAPTURED BY CAMERA
FROM IMMEDIATELY ABOVE
(SCHEMATIC DIAGRAM)

B1

W

B2

EP 2 146 301 A1

# FIG. 5A

| READING START COMMAND TO BE TRANSMITTED TO 2D READER |
| --- |
| STX │ RD │ ETX |

# FIG. 5B

RESPONSE OF 2D READER WHEN READING IS COMPLETED

STX │ OK[CHARACTER STRING] [TOROID RATIO(%)] │ ETX

RESPONSE OF 2D READER WHEN READING IS INCOMPLETE

STX │ ?[ERROR CODE] │ ETX

STX │ ETX │ ARE COMMUNICATION CONTROL CODES
STX: START OF DATA
ETX: END OF DATA

# FIG. 5C

| ERROR CODE | DETAILS |
| --- | --- |
| 1 | TWO-DIMENSIONAL CODE IS NOT FOUND |
| 2 | CHARACTER STRING CANNOT BE GENERATED |
| 3 | |
| 4 | MARKING DOES NOT MATCH READING |

# FIG. 6

EP 2 146 301 A1

S101 — START

STX RD ETX

S102 — CAPTURE IMAGE OF TWO-DIMENSIONAL CODE

S103 — EXTRACT FINDER PATTERN

S104 — IS FINDER PATTERN EXTRACTED? — NO

YES

S105 — EXTRACT TIMING PATTERN

S106 — IS TIMING PATTERN EXTRACTED? — NO

YES

S107 — EXTRACT DATA DOTS

S108 — GENERATE CHARACTER DATA

S109 — IS CHARACTER STRING SUCCESSFULLY RESTORED?

YES — NO

S112 — SET ERROR CODE 1

S110 — CALCULATE TOROID RATIO OF DOT

S113 — SET ERROR CODE 2

S111 — OUTPUT CHARACTER DATA

S114 — OUTPUT ERROR

STX OK[CHARACTER STRING] [TOROID RATIO(%)] ETX

STX ?[ERROR CODE] ETX

S115 — END

# FIG. 7

Flowchart (FIG. 7):

- S201 START
- S202 OUTPUT READING START TO 2D READER → (TO 2D CODE READING PROCESS)
- S203 IS READ DATA RECEIVED? — NO (loops back) / YES
- S204 ERROR? — YES → S211 OUTPUT ERROR CODE / NO
- S205 / S206 COMPARE WITH MARKED CHARACTER STRING
- S206 MATCH? — NO → S212 OUTPUT ERROR CODE 4 / YES
- S207 / S208 CHECK DATA OF TOROID RATIO
- S208 80% > ? — YES → S209 OUTPUT STYLUS REPLACEMENT SIGNAL (MARKING IS NORMAL) / NO
- S213 OUTPUT WARNING (MARKING IS DEFECTIVE)
- S210 OUTPUT COMPLETION
- S214 END

# FIG. 8

MARKING DEVICE — 201

MARKING CONTROL UNIT — 211

EXTERNAL DEVICE — 200

INTERFACE CIRCUIT — 111

2D DATA CONTROL UNIT — 113

2D DATA WRITING UNIT — 117

POSITIONING CONTROL CIRCUIT — 212

MARKING MECHANISM UNIT — 231

X-AXIS MOTOR — 131

Y-AXIS MOTOR — 132

235

MEMORY — 114

CLOCK — 115

COUNTER — 116

WARNING UNIT — 118

MARKING RESULT DETERMINING UNIT — 119

2D READER INTERFACE — 120

240

300

EP 2 146 301 A1

# FIG. 9

EP 2 146 301 A1

FIG. 10

# FIG. 11

# FIG. 12

START

RECEIVE CHARACTER STRING
FROM EXTERNAL DEVICE — S551

ADD TIME CHARACTERS AND SERIAL
NUMBER CHARACTERS TO CHARACTER
STRING FROM EXTERNAL DEVICE — S552

STORE CHARACTER
STRING IN MEMORY — S553

EXPAND CONTENTS OF
MEMORY TO 2D CODE — S554

CALCULATE POSITION OF EACH
DOT OF EXPANDED 2D CODE — S555

MOVE PEN TO POSITION
OF FIRST DOT — S556

S559 —

MOVE TO NEXT
DOT POSITION

OPEN AND CLOSE SOLENOID
VALVE TO PLACE ONE DOT — S557

S558

NO ARE ALL DOTS PLACED?

YES

END

# FIG. 13

IMAGE OF SCRATCHING OR DUST
AROUND MARKED CHARACTER

MARKED CHARACTER "3"

EP 2 146 301 A1

# FIG. 14

MARKING

CR7312A

123456

TWO-DIMENSIONAL
CODE

CHARACTER
STRING

MEANING OF CHARACTER STRING
CR          PART NAME
7           2007
3           MARCH
12          12TH DAY
A           PRODUCTION TIME
            A REPRESENTS 12 O' CLOCK TO 13 O' CLOCK
123456      SERIAL NUMBER

FIG. 15

EP 2 146 301 A1

# FIG. 16

FINDER PATTERN, TIMING PATTERN, AND DATA ARE PARTIALLY MISSING

<table>
<tr><td colspan="2" align="center"><b>INTERNATIONAL SEARCH REPORT</b></td><td>International application No.<br>PCT/JP2008/054143</td></tr>
</table>

A.   CLASSIFICATION OF SUBJECT MATTER
*G06K1/12*(2006.01)i, *B21C51/00*(2006.01)i, *B25H7/04*(2006.01)i

According to International Patent Classification (IPC) or to both national classification and IPC

B.   FIELDS SEARCHED

Minimum documentation searched (classification system followed by classification symbols)
G06K1/12, B21C51/00, B25H7/04

Documentation searched other than minimum documentation to the extent that such documents are included in the fields searched
Jitsuyo Shinan Koho         1922-1996   Jitsuyo Shinan Toroku Koho   1996-2008
Kokai Jitsuyo Shinan Koho   1971-2008   Toroku Jitsuyo Shinan Koho   1994-2008

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| Y<br>A | JP 7-182436 A  (Yamada Mashin Tsuru Kabushiki Kaisha),<br>21 July, 1995 (21.07.95),<br>Full text; all drawings<br>(Family: none) | 1-3,5-9<br>4 |
| Y | JP 2001-283167 A  (Yugen Kaisha Asahi Bijinesu Ashisuto),<br>12 October, 2001 (12.10.01),<br>Full text; all drawings<br>& WO 01/075782 A1      & AU 4282401 A | 1-3,5-9 |
| Y | JP 5-233861 A  (Hitachi, Ltd.),<br>10 September, 1993 (10.09.93),<br>Full text; all drawings<br>(Family: none) | 2,3,5-9 |

☒   Further documents are listed in the continuation of Box C.        ☐   See patent family annex.

| | |
|---|---|
| *      Special categories of cited documents: | "T"   later document published after the international filing date or priority date and not in conflict with the application but cited to understand the principle or theory underlying the invention |
| "A"   document defining the general state of the art which is not considered   to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search<br>19 May, 2008 (19.05.08) | Date of mailing of the international search report<br>03 June, 2008 (03.06.08) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2008/054143

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2006-351620 A (Toshiba Corp.), 28 December, 2006 (28.12.06), Full text; all drawings & US 2006/0278722 A1 & CN 1881583 A | 6-9 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007122539 A

- JP 2005305475 A